(19) Europäisches Patentamt

European Patent Office

Office européen des brevets

(11) **EP 0 917 492 B1**

(12) **EUROPÄISCHE PATENTSCHRIFT**

(45) Veröffentlichungstag und Bekanntmachung des Hinweises auf die Patenterteilung:
**06.11.2002   Patentblatt 2002/45**

(21) Anmeldenummer: 97937519.3

(22) Anmeldetag: **28.07.1997**

(51) Int Cl.[7]: **B01J 13/02**, C08L 1/28

(86) Internationale Anmeldenummer:
**PCT/EP97/04081**

(87) Internationale Veröffentlichungsnummer:
**WO 98/006489 (19.02.1998 Gazette 1998/07)**

(54) **IMMOBILISAT UND VERFAHREN ZUM IMMOBILISIEREN EINES NUTZMATERIALS**

IMMOBILIZATE AND METHOD FOR THE IMMOBILIZATION OF USEFUL MATERIAL

IMMOBILISAT ET PROCEDE POUR IMMOBILISER UNE SUBSTANCE UTILE

(84) Benannte Vertragsstaaten:
**BE DE ES FR GB GR IT NL PT**

(30) Priorität: **08.08.1996  DE 19632032**

(43) Veröffentlichungstag der Anmeldung:
**26.05.1999   Patentblatt 1999/21**

(73) Patentinhaber: **WOLFF WALSRODE AG
29655 Walsrode (DE)**

(72) Erfinder:
  • **ENGELHARDT, Jürgen
    D-29683 Fallingbostel (DE)**
  • **KOCH, Wolfgang
    D-29699 Bomlitz (DE)**

  • **PANNEK, Jörn-Bernd
    D-29683 Fallingbostel (DE)**
  • **VORLOP, Klaus-Dieter
    D-38102 Braunschweig (DE)**
  • **PATEL, Anant, Vallabhbhai
    D-38100 Braunschweig (DE)**

(74) Vertreter: **Pettrich, Klaus-Günter, Dr. et al
c/o Bayer AG,
Konzernbereich RP
Patente und Lizenzen
51368 Leverkusen (DE)**

(56) Entgegenhaltungen:
**DD-A- 285 372**

**Beschreibung**

Die Erfindung betrifft ein Immobilisat, das aus einer ein Nutzmaterial einschließenden vernetzten Außenhülle besteht.

Die Erfindung betrifft ferner ein Verfahren zum Immobilisieren eines Nutzmaterials durch Umhüllen des Nutzmaterials mit einer Außenhülle.

Es sind zahlreiche Verfahren und Materialien bekannt, mit denen ein Nutzmaterial in einer vernetzten Außenhülle eingeschlossen und damit immobilisiert werden können. Vielfache Anwendungsfälle sind für mit niedermolekularen Vernetzungspartnern vernetzende ionotrope Gele, wie beispielsweise Alginat, vorgeschlagen worden. Mit diesen lassen sich das Nutzmaterial enthaltende Vollkugeln oder auch Hohlkugeln herstellen, die beispielsweise einen flüssigen Kern umgeben, der den Vernetzungspartner beinhalten kann. Die Herstellung einer Außenhülle gelingt ferner in Form einer Membran durch Grenzflächenpolimerisation einer Öl-in-Wasser- oder Wasser-in-Öl-Emulsion, bei der die wäßrigen Phase mit einem ersten Polymerisationspartner und die Ölphase mit einem zweiten Polymerisationspartner versehen wird, so daß sich an den Grenzflächen eine Membran durch Copolymerisation der beiden Polymerisationspartner bildet. Ein weiteres Verfahren zur Bildung einer Außenhülle mit überwiegend rein synthetischen Materialien ist das Mikrokapselungsverfahren, bei dem ein Nutzmaterial mit einem flüssigen Hüllmaterial umgeben wird und die gesamte Anordnung in ein Vernetzerbad gelangt.

Die bekannten Materialien zur Herstellung eines Immobilisats weisen entweder eine geringe mechanische Stabilität auf (ionotrope Gele), lassen sich nur umständlich herstellen (Copolymerisations-Membrane) oder sind unter Entsorgungsgesichtspunkten problematisch (synthetische Mikrokapseln), da sie nicht oder nur schwer abbaubar sind.

Der Erfindung liegt daher die Problemstellung zugrunde, ein Material für die Herstellung eines Immobilisats anzugeben, das sowohl eine hohe mechanische und chemische Stabilität aufweist, die einfache Herstellung von gattungsgemäßen Immobilisaten erlaubt und darüber hinaus weitgehend biologisch abbaubar ist.

Ausgehend von dieser Problemstellung besteht erfindungsgemäß die Außenhülle eines Immobilisats der eingangs erwähnten Art aus einem vernetzten Sulfoalkylgruppen, insbesondere Sulfoethylgruppen enthaltenden Celluloseether, vorzugsweise Sulfoethylcellulose (SEC). Als noch geeignetes Material kommen insbesondere noch Sulfopropylcellulose sowie Mischcellulosen, die Sulfoalkyigruppen enthalten, in Frage.

Es hat sich gezeigt, daß die besten Ergebnisse, insbesondere die höchste mechanische Stabilität erreicht wird, wenn der Celluloseether mit Polydimethyldiallylammoniumchlorid (PDMDAAC) vernetzt wird. Gute Ergebnisse werden auch durch die Vernetzung des SEC mit Chitosan erzielt.

Zur Herstellung des Immobilisats wird erfindungsgemäß das Nutzmaterial in eine anionische Sulfoalkylgruppen enthaltende Celluloseether-Lösung, vorzugsweise Sulfoethyletherlösung eingebracht und abgeteilte Portionen der Lösung mit einem kationischen Vernetzungsmittel umgeben, beispielsweise indem die Celluloseether-Lösung in das Vernetzungsmittel eingetropft wird. Bei der Verwendung von Chitosan oder vorzugsweise PDMDAAC als kationischem Vernetzungsmittel dringt dieses von außen in die abgeteilten Portionen der Celluloseether-Lösung ein und führt zu der Vernetzung. Die Vernetzung verhindert ein weiteres Eindringen des Vernetzungsmittels, so daß ein hohles Immobilisat, vorzugsweise eine Hohlkugel, entsteht.

In einem alternativen Verfahren kann das Nutzmaterial in eine Flüssigkeit eingebracht werden, die das kationische Vernetzungsmittel enthält und anschließend von der anionischen Celluloseether-Lösung umgeben wird. Auf diese Weise erfolgt eine Hohlimmobilisatbildung mit einer Vernetzung von innen nach außen. Selbstverständlich kann in allen Fällen eine Nachvernetzung durch Lagerung des gebildeten Hohl-Immobilisats in dem Vernetzungsmittel für eine gewisse Zeit vorgenommen werden.

Die erfindungsgemäßen Immobilisate sind mit einer hohen mechanischen Stabilität herstellbar, gegenüber Phosphaten und Säuren stabil und biologisch abbaubar. Sie eignen sich daher insbesondere auch zum Einbringen von biologischen Pflanzenschutzmitteln usw. in den Boden. In besonders vorteilhafter Weise kann ein erfindungsgemäßes Immobilisat ein Samenkorn umschließen, um es zu schützen. Dabei kann das Immobilisat schützende Chemikalien oder Mikroorganismen und gegebenenfalls Zusatzstoffe, wie Feuchtestabilisatoren oder Nährmittel für die Mikroorganismen, beinhalten.

Die mechanische Stabilität ist mit den nachstehenden Vergleichsversuchen belegt worden:

Zum Einlösen der Cellulosederivate wurde deionisiertes Wasser vorgelegt und als Polymer SEC bei RT unter Rühren (700 Upm) sukzessiv dazugegeben. Nachdem das Polymer gelöst war, wurde der Rührvorgang in der Regel nach 5 Stunden abgebrochen. Der pH-Wert der verwendeten Lösungen lag im Bereich von 5,6 bis 7,8.

Herstellungsbedingt wiesen die Lösungen der SEC-Muster einen geringen unlöslichen Faseranteil auf. Die Proben ergänzen sich zu einem Satz mit ansteigendem Substitutionsgrad (DS) im Bereich von 0,25 bis 1,26.

In der nachstehenden Tabelle 1 sind die verwendeten Cellulosederivate der Anmelderin zusammengestellt. Außerdem wurde Blanose Cellulose Gum Typ 7 MFD (CMC) getestet.

Tabelle 1

| Abkürzung | VS [mPas] | DS (CM) | DS (DCM) | DS (SE) | MS (HE) | DS(M) |
|---|---|---|---|---|---|---|
| CMC I | 30[1] | 0,8 | - | - | - | - |
| CMC II | 40[2] | 0,8 | - | - | - | - |
| CMC III | 600[3] | 0,9 | - | - | - | - |
| CMC IV | 600[3] | 0,7 | - | - | - | - |
| CMC V | 1370[4] | 1,8 | - | - | - | - |
| CMC VI | 150[4] | 0,6 | - | - | - | - |
| CM/DCM | 2260[4] | 0,41 | 0,29 | - | - | - |
| DCMC | 570[4] | - | 0,21 | - | - | - |
| CMC/HE I | 1980[4] | 0,67 | - | - | 0,86 | - |
| CMC/HE II | 3580[4] | 0,67 | - | - | 0,86 | - |
| CMC/HE/M | 6040[4] | 0,72 | - | - | 0,25 | 1,59 |
| CMC/M | 8170[4] | 0,94 | - | - | - | 0,64 |
| CMC/SE I | 130[4] | 0,49 | - | 0,37 | - | - |
| CMC/SE II | 50[4] | 0,92 | - | 0,23 | - | - |
| CMC/SE III | 360[4] | 1,27 | - | 0,47 | - | - |
| SEC I | 870[4] | - | - | 0,25 | - | - |
| SEC II | 1593 | - | - | 0,39 | - | - |
| SEC III | 46[6] | - | - | 0,45 | - | - |
| SEC IV | 1889[6] | - | - | 0,52 | - | - |
| SEC V | 102[6] | - | - | 0,54 | - | - |
| SEC VI | 320[6] | - | - | 0,57 | - | - |
| SEC VII | 649[6] | - | - | 0,57 | - | - |
| SEC VIII | 1770 | - | - | 0,67 | - | - |
| SEC IX | 1200[4] | - | - | 1,26 | - | - |

(1) Brookfield Spindel 2, 1 Upm, 60 s, 2 %ige Lsg.

(2) Brookfield Spindel 4, 1 Upm, 60 s, 2 %ige Lsg.

(3) Brookfield Spindel 2, 2 Upm, 30 s, 2 %ige Lsg.

(4) Rotationsviskosimeter, $D = 2,52 \text{ s}^{-1}$, 2 %ige Lsg.

(5) Handelsprodukt

(6) Roto, $D = 2,55 \text{ s}^{-1}$, 2 %ige Lsg.

Verwendete Abkürzungen:

| CM-/CMC | Carboxymethyl-(Carboxymethylcellulose |
|---|---|
| DCM-/DCMC | Dicarboxymethyl-/Dicarboxymethylcellulose |
| SE-/SEC | Sulfoethyl-/Sulfoethylcellulose |
| HE- | Hydroxyethyl- |
| M- | Methyl- |

Es kamen vier verschiedene PDMDAAC-Produkte Agefloc (Ag) I-IV zum Einsatz, sie sind in der nachstehenden Tabelle aufgeführt.

Verwendete PDMDAAC-Polymere

| Abkürzung | Produkt | Molekulargewicht | Viskosität | Lsg.[%] | pH |
|---|---|---|---|---|---|
| Ag I | Age floc WT 50 SLV | 10000-20000 | 200 cps | 50 | 5,7 |
| Ag II | Age floc WT 35 VLV | 20000-30000 | 191 cps | 35 | 5,9 |
| Ag III | Age floc WT 40 | 50000-100000 | 1860 cps | 40 | 5,5 |
| Ag IV | Age floc WT 40 HV | 100000-200000 | 10000 cps | 40 | 5,3 |

In den Versuchen kamen die Polymerlösungen Ag I-IV mit einer Konzentration von 2 % zum Einsatz.

Die Lösungen der Ausgangspolymere kamen beim Screening und den nachfolgenden systematischen Untersuchungen unsteril zum Einsatz. Mittels einer Spritze und Kanüle (0,90 x 40 mm / 20 G x 1,5 / Gr. 1; Braun Melsungen) wurden die wäßrigen Lösungen der Cellulosederivate und Polyacrylate bei Raumtemperatur in eine gerührte PDMAAC-Lösung (in Schnappdeckelgläschen) getropft. Die Fallhöhe betrug ca. 8 cm, wobei darauf zu achten ist, die Fallhöhe nicht zu hoch zu wählen, da die Kugeln sonst zerplatzen. Bei zu geringer Fallhöhe sinken die HK nicht in den Vernetzer.

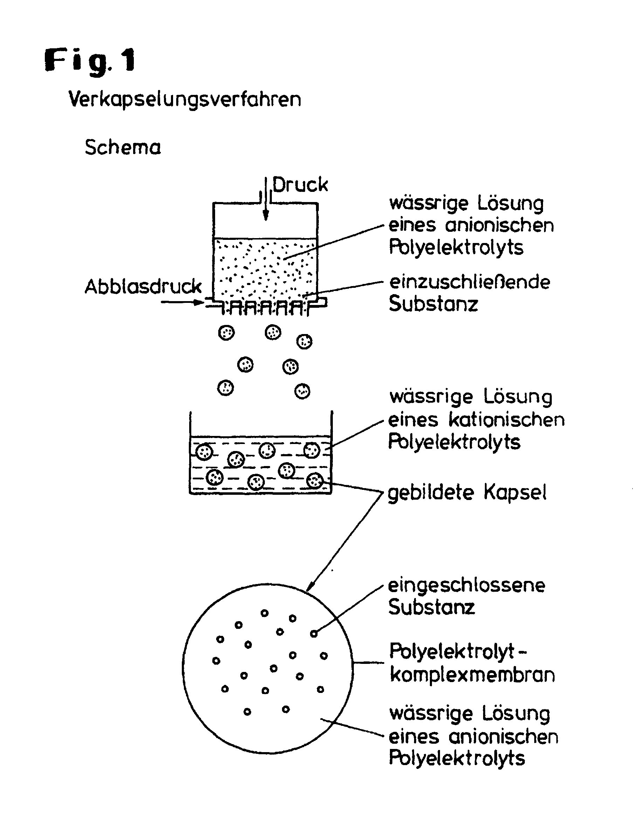

In Figur 1 ist der Versuchsaufbau schematisch dargestellt.

Bei den Screeningversuchen wurden die erhaltenen HK nach einer Vernetzungsdauer von 15 Minuten vom Vernetzer abgesiebt und bei ausreichender Stabilität in deionisiertem Wasser 0,45 %iger und 0,9 %iger NaCl-Lösung gelagert sowie deren Stabilität zu den Zeitpunkten $t_o$, $t_{24h}$ und $t_{48h}$ bestimmt.

Eine systematische Untersuchung der zuvor gescreenten stabilsten HK erfolgte, indem die HK in Abhängigkeit von der Vernetzungsdauern in PDMDAAC getestet wurden. Dazu verblieben die Kugeln 1, 15, 30, 60, 120, 200 min bzw. bis zum Beginn der Schrumpfung der HK in dem gerührten Vernetzer und wurden anschließend in deionisiertem Wasser, 0,45 %iger und 0,9 %iger NaCl-Lösung gelagert. Zur Charakterisierung der erhaltenen HK wurde die Stabilität, der Durchmesser und die Membranstruktur bzw. -dicke ermittelt.

**Verfahrensschritte (vergl. Figur 1):**

- Vermischen des einzuschließenden. Materials mit wäßrigen Polyanionlösung (Kapselkern)
- Eintragen in einen geeigneten Polykationen enthaltenden Vernetzer (PDMDAAC)
- Entfernen von überschüssigem Vernetzer
- Überführung der Kapseln in das zur Aufbewahrung bzw. zum Einsatz vorgesehene Medium.

Die kugelförmige transparente Symplexmembran bildet sich während des Eintauchvorganges des Tropfens an der Grenzfläche zwische Polyanion- und Polykation und beruht auf elektrostatischer Bindung.

Die autoklavierte 2,6 %ige Polymerlösung SEC II (10 min bei 121°C, 2 Wochen bei 4°C gelagert) wurde in 2 %ige PDMDAAC-Lösung Ag III (3 Tage bei 4°C gelagert) mittels einer Kanüle (Innendurchmesser 0,9 mm) getropft und 30 min bei Raumtemperatur bei einer Rührgeschwindigkeit von 300 Upm vernetzt.

Die Kugeln wurden in deionisiertem Wasser und 0,9 %iger NaCl-Lösung gelagert. Einen Tag später wurden die so erhaltenen Kugeln nachvernetzt. Die Nachvernetzungszeiten betrugen 0, 5, 15, 30, 60 und 120 min. Für die in deionisiertem Wasser gelagerten Kugeln wurde als Vernetzer eine 0,25 %ige PDMDAAC-Lösung Ag III in Wasser pH 6,8 gewählt, die in NaCl-Lösung gelagerten Kugeln wurden in 0,25 %iger PDMDAAC-Lösung Ag III in 0,9 %iger NaCl-Lösung pH 6,8 nachvernetzt. Alle nachvernetzten Kugeln wurden in 0,9 %iger NaCl-Lösung gelagert. Nach 4 Tagen Lagerung bei 4°C erfolgte die Stabilitätsmessung der HK.

**Ermittlung der Membranstruktur und der Membrandichte.**

Zur exakten Bestimmung der Membrandicke wurden die SEC-HK (2,6 %ige Polymerlösung SEC II in 2 %ige PCMDAAC-Lösung AgIII, Kanüle 0,9 mm Innendurchmesser für große HK, Kanüle 0,4 mm Innendurchmesser für kleine HK, 50 min Vernetzungszeit) nach Karnovsky (1965) fixiert und die HK vorsichtig auseinandergerissen, um die Stärke der Membran ermitteln zu können. Nachdem die Oberfläche mit Gold besputtert wurde, erfolgte die Aufnahme der Membran im Rasterelektronenmikroskop (REM). Anhand der Aufnahmen können Aussagen über die Struktur der Membrand sowie deren Dicke erfolgen.

**Bestimmung des Kugeldurchmessers**

Mittels Stereolupe wurde der Durchmesser $d_0$ der HK zum Zeitpunkt $t_0$ bestimmt. Nach der Lagerung der HK in deionisiertem Wasser und 0,45 %iger bzw. 0,9 %iger NaCl-Lösung erfolgte nach 24 bzw. 48 h erneut die Messung des Durchmessers $d_{24h}$ und $d_{48h}$. Somit konnte das Quellungsverhalten der HK ermittelt werden. Die Berechnung der Quellung erfolgte gemäß der Formel

$$\text{Quellung} = \frac{\text{Durchmesser der gequollenen Kugel}}{\text{Durchmesser der Kugel zum Zeitpunkt } T_0} \cdot 100\%] - 100$$

Von den SEC-HK wurde von jeweils 10 Kugeln der Durchmesser bestimmt, um festzustellen, ob während der weiterführenden Anzucht in Maismehl-Medium eine Quellung oder Schrumpfung der Immobilisate erfolgt.

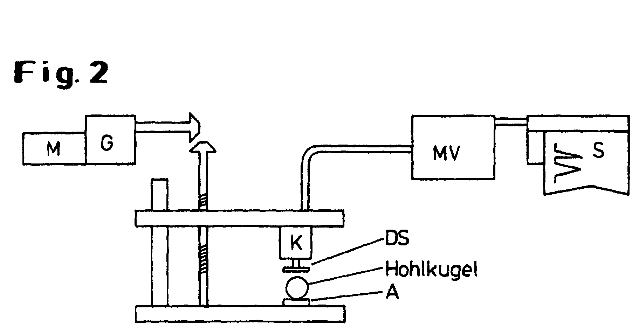

**Messung der Kugelstabilität (vergl. Figur 2)**

Es erfolgte eine sofortige Messung der Stabilität der HK. Während des Transportes der HK zur Meßapparatur wurden diese in deionisiertem Wasser aufbewahrt. Nach 24 und 48 h Lagerung der HK in Multititerlochplatten bei 4°C in deionisiertem Wasser, 0,45 %iger und 0,9 %iger NaCl-Lösung wurde erneut die Stabilität der HK vermessen.
Die verwendete Meßapparatur nach Washausen (1980) wird in Figur 2 schematisch dargestellt.
Über eine Gewindestange, deren Antrieb über einen Motor (M) mit Schaltgetriebe (G) erfolgte, wurde die Kraftmeßdose (k) auf- und abwärts bewegt. An der Kraftmeßdose ist der Druckstempel (DS) befestigt.
Zur Bestimmung des Bruchpunktes wurde eine HK auf die Ablageplatte (a) gelegt. Der Druckstempel wurde manuell abwärts bewegt, bis gerade der Kontakt mit der HK erfolgte. An einem eingebauten Meßschieber konnte der Perlendurchmesser direkt abgelesen werden. Danach wurde die Apparatur gestartet und die Kraftmeßdose bewegte sich mit einer Geschwindigkeit von 1,5 mm/min abwärts. Die Vorschubgeschwindigkeit wurde experimentell ermittelt (Weg/Zeit). Das der jeweiligen Druckkraft entsprechende Meßsignal wurde an der Kraftmeßdose abgenommen und über einen Meßverstärker (MV) zum Schreiber übertragen. Die HK wurde langsam zusammengedrückt, indem sich der Druckstempel senkte. Durch den Vorschub des Stempels wuchs die ausgeübte Kraft kontinuierlich. Die maximale Kraft, die auf eine HK ausgeübt werden kann, war am Bruchpunkt erkennbar (HK zerbrach).
Wenn die HK nicht brach, änderte ein Grenzwertschalter die Schubrichtung der Kraftmeßdose bei einem Abstand von 0,15 mm zwischen Druckstempel und Auflageplatte. (Die HK weiter zusammenzupressen wäre wenig sinnvoll, da die Kugeln eine Membrandicke von ca. 40 µm aufwiesen.)
Aus der konstanten vertikalen Bewegung der Kraftmeßdose und der dazu aufgewandten Kraft, die auf die HK übertragen wurde, resultierte das Meßsignal auf dem Schreiber (S). Nach vorheriger Kalibrierung mittels Wägestück konnte anhand des erfolgten Schreiberausschlages bei den Messungen ein sofortiges Ablesen der aufgewendeten Kraft erfolgen.
Die erzielten Ergebnisse sind in der nachstehenden Tabelle 2 aufgeführt.

Tabelle 2

| Abkürzung | pH/% | DS | Ag I | Ag II | Ag III | Ag IV |
|---|---|---|---|---|---|---|
| CMC I | 6,9/9,0 | 0,8 | --- | --- | + | - |
| CMC II | 6,6 / 8,0<br>6,8/11,0 | 0,8 | ---<br>--- | ---<br>-- | -<br>-- | -<br>-- |
| CMC III | 7,1/4,0 | 0,9 | -- | --- | - | + |
| CMC IV | 6,9/3,5 | 0,7 | - | + | + | - |
| CMC V | 6,4 / 4,0 | 1,8 | --- | - | - | -- |
| CMC VI | 6,916,0 | 0,6 | - | ++ | + | + |
| CM/DCM I | 7,2/3,0 | 0,41/0,29 | --- | -- | ++ | ++ |
| DCM I | 7,4/3,0 | 0,21 | --- | --- | + | + |
| CMC/HE I | 6,1/3,0 | 0,67/0,86 | --- | - | --- | + |

Tabelle 2   (fortgesetzt)

| Abkürzung | pH/% | DS | Ag I | Ag II | Ag III | Ag IV |
|---|---|---|---|---|---|---|
| CMC/HE II | 6,3/3,0 | 0,67/0,86 | - | - | -- | + |
| CMC/HE/MI | 7,2/2,0 | 0,72/0,25/1,59 | -- | -- | -- | + |
| CMC/M I | 7,5/2,0 | 0,94/0,64 | -- | -- | - | ++ |
| CMC/SE I | 6,7/6,0 | 0,49/0,37 | --- | --- | -- | + |
| CMC/SE II | 6,0/10,0 | 0,92/0,23 | --- | --- | --- | --- |
| CMC/SE III | 6,2/ 5,0 | 1,27 0,47 | --- | -- | -- | - |
| SEC I | 6,6/1,0 | 0,25 | (++) | (+++) | +++ | +++ |
| SEC II | 7,0/2,0 | 0,39 | (+++) | +++ | +++ | +++ |
| SEC III | 5,6/4,0 | 0,45 | --- | -- | ++ | ++ |
| SEC IV | 6,8/2,0 | 0,52 | (+++) | +++ | +++ | +++ |
| SEC V | 7,8/4,0 | 0,54 | --- | ++ | ++ | + |
| SEC VI | 7,2/4,0 | 0,57 | --- | +++ | ++ | + |
| SEC VII | 6,1/3,0 | 0,57 | (+) | +++ | ++ | ++ |
| SEC VIII | 7,4/2,0 | 0,67 | -- | +++ | +++ | +++ |
| SEC IX | 6,7/4,0 | 1,26 | --- | --- | ++ | ++ |
| ( ) bereits geschrumpft | | | | | | |

Es zeigt sich aus der Tabelle 2, daß das PDMDAAC für stabile SEC-Kugeln vorzugsweise ein Molekulargewicht zwischen 20 000 und 100 000 haben sollte. In Einzelfällen können auch mit Molekulargewichten zwischen 10 000 und 20 000 und 100000 bis 200000 bei geeigneten SEC-Lösungen hochstabile Kugeln erzielt werden.

Die Vergleichsergebnisse zeigen, daß insbesondere Kugeln aus Carboxymethylcellulose (CMC) keine vergleichbaren mechanischen Stabilitätsergebnisse liefern.

**Patentansprüche**

1. Immobilisat bestehend aus einer ein Nutzmaterial einschließenden vernetzten Außenhülle, **dadurch gekennzeichnet, daß** die Außenhülle mit einem vernetzten, Sulfoalkylgruppen enthaltenden Celluloseether gebildet ist.

2. Immobilisat nach Anspruch 1, **dadurch gekennzeichnet, daß** die Außenhülle mit einer vernetzten Sulfoalkylcellulose, insbesondere Sulfoethylcellulose (SEC) gebildet ist.

3. Immobilisat nach Anspruch 1 oder 2, **dadurch gekennzeichnet, daß** der Celluloseether mit Polydimethyldiallylammoniumchlorid (PDMDAAC) vernetzt ist.

4. Immobilisat nach Anspruch 1 oder 2, **dadurch gekennzeichnet, daß** der Celluloseether mit Chitosan vernetzt ist.

5. Verfahren zum Immobilisieren eines Nutzmaterials durch Umhüllen des Nutzmaterials mit einer Außenhülle, **dadurch gekennzeichnet, daß** das Nutzmaterial in eine anionische, Sulfoalkylgruppen enthaltende Celluloseether-Lösung eingebracht wird und daß abgeteilte Portionen der Lösung mit einem kationischen Vernetzungsmittel umgeben werden.

6. Verfahren nach Anspruch 5, **dadurch gekennzeichnet, daß** die Celluloseether-Lösung in das Vernetzungsmittel eingetropft wird.

7. Verfahren zum Immobilisieren eines Nutzmaterials durch Umhüllen des Nutzmaterials mit einer Außenhülle, **dadurch gekennzeichnet, daß** das Nutzmaterial in einer ein kationisches Vernetzungsmittel enthaltenden Flüssigkeit von einer anionischen Sulfoalkylgruppen enthaltende Celluloseether-Lösung umgeben wird.

8. Verfahren nach einem der Ansprüche 5 bis 7, **gekennzeichnet durch** die Verwendung einer Sulfoalkylcellulose-Lösung, vorzugsweise Sulfoethylencellulose-Lösung, als anionische Lösung.

9. Verfahren nach einem der Ansprüche 5 bis 8, **gekennzeichnet durch** die Verwendung von Chitosan als kationisches Vernetzungsmittel.

10. Verfahren nach einem der Ansprüche 5 bis 8, **gekennzeichnet durch** die Verwendung von Polydimethyldiallylammoniumchlorid (PDMDAAC) als kationisches Vernetzungsmittel.

**Claims**

1. Immobilisate consisting of a cross-linked external sheath enveloping a useful material, **characterized in that** the external sheath is formed by a cross-linked cellulose ether containing sulfoalkyl groups.

2. Immobilisate according to Claim 1, **characterized in that** the external sheath is formed by a cross-linked sulfoalkyl cellulose, in particular sulfoethyl cellulose (SEC).

3. Immobilisate according to Claim 1 or 2, **characterized in that** the cellulose ether is cross-linked with polydimethyldiallylammonium chloride (PDMDAAC).

4. Immobilisate according to Claim 1 or 2, **characterized in that** the cellulose ether is cross-linked with chitosan.

5. Method for immobilising a useful material by encapsulating the useful material with an external sheath, **characterized in that** the useful material is introduced into an anionic cellulose ether solution containing sulfoalkyl groups, and **in that** divided portions of the solution are enclosed by a cationic cross-linking agent.

6. Method according to Claim 5, **characterized in that** the cellulose ether is applied dropwise into the cross-linking agent.

7. Method for immobilising a useful material by encapsulating the useful material with an external sheath, **characterized in that** the useful material, in a liquid containing a cationic cross-linking agent, is enclosed by an anionic cellulose ether solution containing sulfoalkyl groups.

8. Method according to one of Claims 5 to 7, **characterized by** the use of a sulfoalkyl cellulose solution, preferable a sulfoethylene cellulose solution, as the anionic solution.

9. Method according to one of Claims 5 to 8, **characterized by** the use of chitosan as the cationic cross-linking agent.

10. Method according to one of Claims 5 to 8, **characterized by** the use of polydimethyldiallylammonium chloride (PDMDAAC) as the cationic cross-linking agent.

**Revendications**

1. Immobilisat consistant en une enveloppe externe réticulée, piégeant un matériau utile, **caractérisé en ce que** l'enveloppe externe est formée d'un éther de cellulose réticulé contenant des radicaux sulfoalcoyle.

2. Immobilisat suivant la revendication 1, **caractérisé en ce que** l'enveloppe externe est formée d'une sulfoalcoylcellulose réticulée, en particulier une sulfoéthylcellulose (SEC).

3. Immobilisat suivant la revendication 1 ou 2, **caractérisé en ce que** l'éther de cellulose est réticulé avec du poly (chlorure de diméthyldiallylammonium) (PDMDAAC).

4. Immobilisat suivant la revendication 1 ou 2, **caractérisé en ce que** l'éther de cellulose est réticulé avec du chitosane.

5. Procédé pour immobiliser un matériau utile par enveloppement du matériau utile avec une enveloppe externe, **caractérisé en ce que** le matériau utile est introduit dans une solution d'éther de cellulose anionique, contenant des radicaux sulfoalcoyle et que des fractions divisées de la solution sont entourées d'un agent de réticulation cationique.

6. Procédé suivant la revendication 5, **caractérisé en ce que** la solution d'éther de cellulose est ajoutée goutte à goutte dans l'agent de réticulation.

7. Procédé pour immobiliser un matériau utile par enveloppement du matériau utile avec une enveloppe externe, **caractérisé en ce que** le matériau utile est entouré dans un liquide contenant un agent de réticulation cationique, d'une solution d'éther de cellulose anionique, contenant des radicaux sulfoalcoyle.

8. Procédé suivant l'une quelconque des revendications 5 à 7, **caractérisé par** l'utilisation d'une solution de sulfoalcoylcellulose, de préférence une solution de sulfoéthylcellulose, comme solution anionique.

9. Procédé suivant l'une quelconque des revendications 5 à 8, **caractérisé par** l'utilisation de chitosane comme agent de réticulation cationique.

10. Procédé suivant l'une quelconque des revendications 5 à 8, **caractérisé par** l'utilisation de poly(chlorure de diméthyldiallylammonium) (PDMDAAC) comme agent de réticulation cationique.

# Fig. 1

Verkapselungsverfahren

Schema

Druck

wässrige Lösung
eines anionischen
Polyelektrolyts

Abblasdruck

einzuschließende
Substanz

wässrige Lösung
eines kationischen
Polyelektrolyts

gebildete Kapsel

eingeschlossene
Substanz

Polyelektrolyt -
komplexmembran

wässrige Lösung
eines anionischen
Polyelektrolyts

# Fig. 2